# FASCICULE DE BREVET EUROPEEN

(11) **EP 1 433 639 B1**
(45) Date de publication et mention de la délivrance du brevet: **17.08.2005**
(21) Numéro de dépôt: 03292768.3
(22) Date de dépôt: 05.11.2003
(51) Int. Cl.: B60K 3/04, B60K 11/08, B60H 1/26

(54) **Dispositif pour interdire la formation d'une gangue de matériau solide de projections sur une sortie d'air**
Vorrichtung zur Verhinderung der Bildung von Schmutz auf einem Luftauslass
Inhibiting device for the formation of solid dirt on an air outlet

(30) Priorité: 23.12.2002 FR 0216488
(43) Date de publication de la demande: 30.06.2004
(73) Titulaire: GIAT INDUSTRIES, 78000 Versailles (FR)
(72) Inventeur: Brun, Michel, 78310 Maurepas (FR); Carlier, Sylvain, 78290 Guyancourt (FR); Saunier, Antoine, 28230 Epernon (FR)
(74) Mandataire: Célanie, Christian

(56) Documents cités:
- EP-A- 0 985 874
- DE-A- 3 221 378
- DE-A- 3 903 361

## Description

Le domaine technique de l'invention est celui des dispositifs permettant de protéger des sorties de flux de la formation d'une gangue solide due à des projections susceptibles de venir s'y projeter. Un tel dispositif est connu du document EP 985 874 A, qui divulgue un filtre d'air, monté de manière vibrante pour éviter une gangue solide due à des particules dans l'air.

Les sorties d'air, en particulier sur un véhicule, sont le plus souvent réalisées de façon simple c'est-à-dire munies de grilles. Ces sorties d'air sont généralement à proximité de matériaux de toutes sortes qui sont projetés sur la grille et s'y accumulent. Au bout d'un certain temps, ces grilles sont complètement obstruées ce qui constitue une gêne importante pour le fonctionnement de la sortie d'air. Il faut alors procéder à un nettoyage manuel souvent mal commode, voire impossible. De plus, si ces matériaux agglomérés sont asséchés, le nettoyage manuel devient très difficile.

Le but de l'invention est donc de remédier à de tels inconvénients en permettant de placer les sorties d'air, sur des véhicules par exemple, en des endroits exposés aux projections, tout en évitant une accumulation.

L'invention a donc pour objet un dispositif pour interdire la formation d'une gangue de matériau solide de projections sur une sortie d'air, par exemple celle d'un véhicule blindé, localisée à proximité de projections, caractérisé en ce qu'il comprend une persienne comportant au moins deux ailettes vibrantes fixées sur un support, lesdites ailettes étant de deux types différents montés en alternance et vibrant de manière différente.

Selon une caractéristique du dispositif, une ailette vibrante est reliée au support par un nombre N de fixations et l'autre ailette vibrante par un nombre N+/-1 de fixations.

Selon encore une autre caractéristique du dispositif, le support des ailettes vibrantes est constitué d'un ensemble de barreaux sensiblement perpendiculaires à la direction axiale des ailettes.

Selon encore une caractéristique du dispositif, il comporte des butées limitant les possibilités de débattement afin de supprimer les impacts entre les ailettes et le support et ainsi éviter les chocs.

Selon encore une autre caractéristique du dispositif, les butées sont disposées sur les ailettes ou sur le support.

Selon encore une autre caractéristique du dispositif, les butées sont réalisées partiellement ou totalement dans un matériau non métallique.

Selon encore une autre caractéristique du dispositif, la vibration des ailettes est provoquée par les chocs, secousses et vibrations subis par la sortie d'air.

Selon encore une autre caractéristique du dispositif, le mouvement des ailettes est provoqué par une ligne d'électroaimants disposée à proximité des noeuds de vibration des ailettes, dont la fréquence est adaptée aux deux types d'ailettes et dont le déphasage entraîne les deux types d'ailettes à vibrer en opposition ou en quadrature.

Selon encore une caractéristique du dispositif, le support des ailettes présente une rigidité supérieure à celle des ailettes.

Selon encore une caractéristique du dispositif, les ailettes présentent une épaisseur procurant une rigidité telle que leurs vibrations demeurent sans amortissement notable en présence des projections.

Selon une autre caractéristique du dispositif, la persienne comprend en amont des déflecteurs du flux d'air munis d'une partie courbe apte à orienter le flux vers chacune des ailettes.

Un tout premier avantage du dispositif selon l'invention est qu'il interdit la formation d'une gangue solide de projections comme de la boue au niveau de la sortie d'air en provoquant leur élimination.

Un autre avantage du dispositif selon l'invention réside dans le fait que les projections qui viennent frapper les ailettes sont décollées au fur et à mesure de leur accumulation.

Un autre avantage encore du dispositif selon l'invention est qu'il permet de prévoir des évacuations d'air ou de gaz sur un véhicule blindé sans compromettre son invisibilité infrarouge. En effet, les sorties d'air chaud peuvent être dans ce cas placées sous le véhicule en un endroit approprié rendant ainsi la détection de la source chaude très difficile voire impossible.

Un autre avantage encore de l'invention réside dans la conception simple et un remplacement facilité en cas de rupture des ailettes.

D'autres caractéristiques, détails et avantages de l'invention seront mieux compris à la lecture du complément de description qui va suivre de modes particuliers de réalisation donnés à titre d'exemple en relation avec des dessins sur lesquels :
- la figure 1 représente une vue d'une sortie d'air selon l'invention,
- la figure 2 est une représentation schématique de la circulation du flux d'air à l'aide d'un déflecteur.

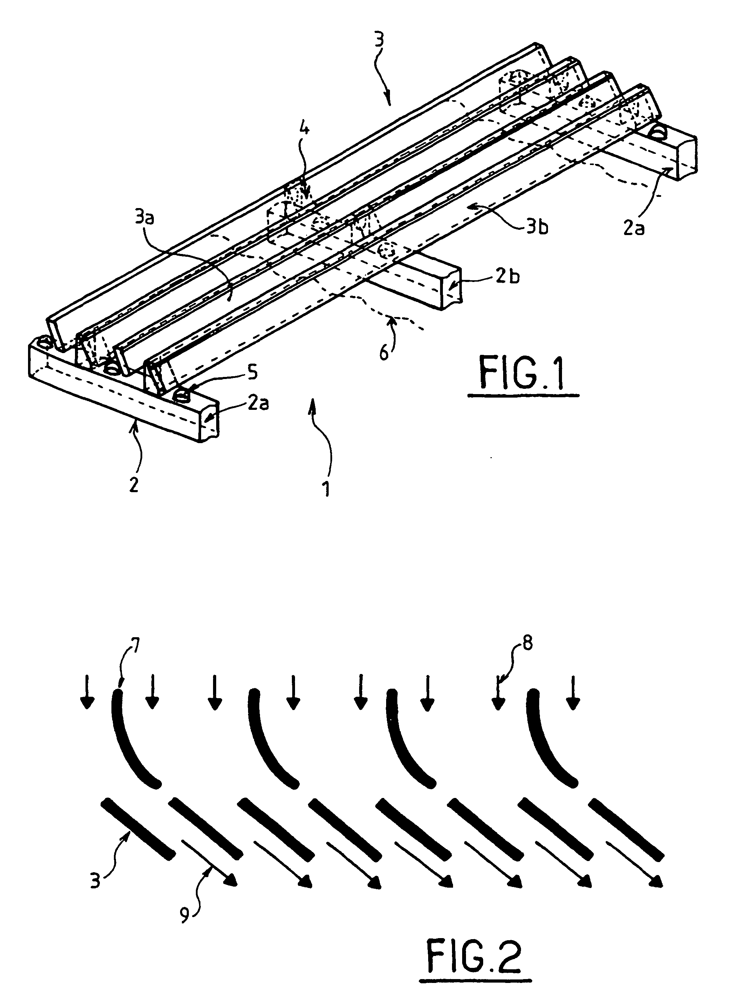

Sur la figure 1, on a représenté une persienne 1 constituée d'un support 2 et d'ailettes 3. La persienne est fixée à l'embouchure d'un conduit d'air non représenté sans qu'il soit utile de donner des détails complémentaires. Les ailettes se présentent sous la forme d'une plaque allongée, par exemple rectangulaire, disposée obliquement par rapport au support.

Les ailettes devant vibrer, elles ne peuvent présenter de courbure perpendiculaire à leur axe et doivent s'inscrire dans un plan.

Sur le dessin, on voit représentés trois barreaux 2 pour la fixation des ailettes vibrantes, deux terminaux 2a et un central 2b. Des pièces intermédiaires de fixation 4 pour les ailettes 3 sont représentés sur les barreaux 2. Ces pièces intermédiaires de fixation doivent assurer une fixation souple qui permette aux ailettes de vibrer, ainsi qu'une position inclinée des ailettes par rapport au plan de la sortie d'air. La fixation des ailettes sur ces pièces peut se faire par soudure, vissage, boulonnage ou tout autre procédé connu (rivetage multiple, encliquetage, pincement, goupillage, etc...)

Dans l'exemple représenté, la persienne est munie de deux types d'ailettes vibrantes, l'ailette 3a fixée uniquement sur le barreau central 2b et l'ailette 3b fixée sur les deux barreaux latéraux 2a. Des butées 5 viennent compléter le maintien des ailettes sur les barreaux exempts d'élément de fixation. Ces butées 5 limitent les mouvements de vibration des ailettes et évitent ainsi les chocs entre ailettes ou entre les ailettes et les barreaux.

Les butées 5 sont des éléments allongés ou non, fixés entre deux ailettes qui viennent, lors de leurs vibrations, cogner contre elles, ce qui les arrête et les empêche de se toucher les unes les autres ou de frapper le support, tous chocs qui peuvent entraîner des dégradations mécaniques et des nuisances acoustiques. Les butées sont avantageusement réalisées dans un matériau non métallique, par exemple plastique, qui amortit les vibrations et les chocs sans endommager les ailettes.

On a représenté par des lignes de pointillés l'emplacement d'éventuelles lignes d'électroaimants 6, qui dans une autre configuration, mettraient les ailettes en mouvement.

Au vu du dessin, on comprend que soit les chocs subis par la persienne, soit les lignes d'électroaimants 6 mettent en mouvement les ailettes 3. Les deux types d'ailettes, 3a et 3b, vibrent de façon différente, éventuellement en opposition ou en quadrature, ce qui empêche la formation d'une gangue solide sur la persienne 1.

Les vibrations différentes des deux types d'ailettes sont dues à l'implantation alternées de leurs fixations, ainsi qu'éventuellement le choix de leurs épaisseurs. Les fixations alternées entraînent un décalage entre les parties des ailettes libres de vibrer et celles qui sont fixes. Utiliser des ailettes d'épaisseurs différentes permet de retrouver, malgré les différences de fixation, à des fréquences et amplitudes de vibration assez voisines, susceptibles d'être excitées par un même stimulus, mécanique ou électromagnétique.

Les butées 5 peuvent être réalisées partiellement ou totalement dans un matériau non métallique pour éviter les chocs métal contre métal qui pourraient endommager les ailettes 3.

Sur la figure 2, on a représenté de façon schématique l'interposition d'un déflecteur de la circulation d'air au niveau d'une sortie d'air munie du dispositif selon l'invention.

Les ailettes vibrantes 3 et le déflecteur d'air 7 disposé en amont y sont représentés. Ce déflecteur 7 est orienté pour diriger le flux d'air dans la direction voulue par l'opérateur. Il est indépendant des parties mobiles de la persienne 1 mais peut être solidaire de ses parties fixes.

Le flux d'air 8 spontané en amont du déflecteur et le flux d'air 9 en aval de la persienne ressortant réorienté sont représentés par des flèches.

Ce schéma montre clairement qu'avant d'atteindre les ailettes 3, le flux d'air sortant 9 est déjà orienté dans la direction désirée, ce que les ailettes ne pourraient faire qu'imparfaitement. Cette réorientation du flux d'air permet de l'éloigner des éléments solides (parois et sol), préservant ainsi l'invisibilité infra-rouge du véhicule. Cette configuration permet donc de réduire considérablement la signature thermique du véhicule ainsi équipé.

Le déflecteur est indépendant de la persienne mais peut être fixé sans modification importante sur le même support. Il peut être réalisé sous diverses formes telles qu'une grille ou des lamelles.

D'autres modes de réalisation et variantes sont bien entendu possibles sans pour autant sortir du cadre de l'invention, comme défini dans les revendications.

## Revendications

1. Dispositif pour interdire la formation d'une gangue de matériau solide de projections sur une sortie d'air, par exemple celle d'un véhicule blindé, localisée à proximité de projections, **caractérisé en ce qu'**il comprend une persienne (1) comportant au moins deux ailettes vibrantes (3) fixées sur un support (2), lesdites ailettes étant de deux types différents (3a, 3b) montés en alternance et vibrant de manière différente.

2. Dispositif selon la revendication 1, **caractérisé en ce qu'**une ailette vibrante (3) est reliée au support (2) par un nombre N de fixations et l'autre ailette vibrante par un nombre N+/-1 de fixations.

3. Dispositif selon la revendication 2, **caractérisé en ce que** le support (2) des ailettes vibrantes (3) est constitué d'un ensemble de barreaux (2) sensiblement perpendiculaires à la direction axiale des ailettes (3).

4. Dispositif selon l'une quelconque des revendications 1 à 3, **caractérisé en ce qu'**il comporte des butées (5) limitant les possibilités de débattement afin de supprimer les impacts entre les ailettes (3) et le support (2) et ainsi éviter les chocs.

5. Dispositif selon la revendication 4, **caractérisé en ce que** les butées (5) sont disposées sur les ailettes (3) ou sur le support (2).

6. Dispositif selon la revendication 5, **caractérisé en ce que** les butées (5) sont réalisées partiellement ou totalement dans un matériau non métallique.

7. Dispositif selon l'une quelconque des revendications 1 à 6, **caractérisé en ce que** la vibration des ailettes (5) est provoquée par les chocs, secousses et vibrations subis par la sortie d'air.

8. Dispositif selon l'une quelconque des revendications 1 à 6, **caractérisé en ce que** la vibration des ailettes est provoquée par une ligne d'électroaimants (6) disposée à proximité des noeuds de vibration des ailettes, dont la fréquence est adaptée aux deux types d'ailettes et dont le déphasage entraîne les deux types d'ailettes à vibrer en opposition ou en quadrature.

9. Dispositif selon l'une quelconque des revendications 1 à 8, **caractérisé en ce que** le support (2) des ailettes (3) présente une rigidité supérieure à celle des ailettes (3).

10. Dispositif selon l'une quelconque des revendications 1 à 8, **caractérisé en ce que** les ailettes (3) présentent une épaisseur procurant une rigidité telle que leurs vibrations demeurent sans amortissement notable en présence des projections.

11. Dispositif selon l'une quelconque des revendications précédentes, **caractérisé en ce que** la persienne (1) comprend en amont des déflecteurs du flux d'air (7) munis d'une partie courbe apte à orienter le flux vers chacune des ailettes.

## Patentansprüche

1. Vorrichtung zum Unterbinden der Bildung einer festen Materialablagerung von Spritzern an einem Luftauslass, zum Beispiel dem eines gepanzerten Fahrzeuges, der in der Nähe von Spritzern angeordnet ist, **dadurch gekennzeichnet, dass** sie eine Gitterabdeckung (1) enthält, die wenigstens zwei schwingende Leitflügel (3) umfasst, die an einem Träger (2) befestigt sind, wobei die genannten Leitflügel von zwei unterschiedlichen Arten (3a, 3b) sind, die in Wechsel und auf unterschiedliche Weise schwingend angebracht sind.

2. Vorrichtung nach Anspruch 1, **dadurch gekennzeichnet, dass** ein schwingender Leitflügel (3) durch eine Anzahl N von Befestigungen und der andere schwingende Leitflügel durch eine Anzahl N+/-1 von Befestigungen mit dem Träger (2) verbunden ist.

3. Vorrichtung nach Anspruch 2, **dadurch gekennzeichnet, dass** der Träger (2) der schwingenden Leitflügel (3) von einem Satz von Stäben (2) gebildet wird, die im Wesentlichen senkrecht zur axialen Richtung der Leitflügel (3) verlaufen.

4. Vorrichtung nach irgendeinem der Ansprüche 1 bis 3, **dadurch gekennzeichnet, dass** sie Anschläge (5) enthält, welche die Möglichkeiten der Durchbiegung begrenzen, um Stöße zwischen den Leitflügeln (3) und dem Träger (2) zu unterbinden und so Schläge zu vermeiden.

5. Vorrichtung nach Anspruch 4, **dadurch gekennzeichnet, dass** die Anschläge (5) auf den Leitflügeln (3) oder auf dem Träger (2) angeordnet sind.

6. Vorrichtung nach Anspruch 5, **dadurch gekennzeichnet, dass** die Anschläge (5) teilweise oder vollständig aus einem nichtmetallischen Werkstoff hergestellt sind.

7. Vorrichtung nach irgendeinem der Ansprüche 1 bis 6, **dadurch gekennzeichnet, dass** die Vibration der Leitflügel (3) durch die Stöße, Rüttelbewegungen und Vibrationen bewirkt wird, denen der Luftauslass unterworfen ist.

8. Vorrichtung nach irgendeinem der Ansprüche 1 bis 6, **dadurch gekennzeichnet, dass** die Vibration der Leitflügel durch eine Reihe von Elektromagneten (6) bewirkt wird, die in der Nähe der Vibrationsknoten der Leitflügel angeordnet sind, deren Frequenz an die zwei Arten von Leitflügeln angepasst wird und deren Phasenverschiebung die beiden Arten von Leitflügeln dazu antreibt, gegenläufig oder um 90° phasenverschoben zu schwingen.

9. Vorrichtung nach irgendeinem der Ansprüche 1 bis 8, **dadurch gekennzeichnet, dass** der Träger (2) der Leitflügel (3) eine Steifigkeit aufweist, die größer ist als die der Leitflügel (3).

10. Vorrichtung nach irgendeinem der Ansprüche 1 bis 8, **dadurch gekennzeichnet, dass** die Leitflügel (3) eine Dicke aufweisen, die eine derartige Steifigkeit bewirkt, dass bei Vorhandensein von Spritzern ihre Vibrationen ohne nennenswerte Dämpfung bleiben.

11. Vorrichtung nach irgendeinem der vorhergehenden Ansprüche, **dadurch gekennzeichnet, dass** die Gitterabdeckung (1) stromaufwärts Deflektoren des Luftstromes (7) umfasst, die mit einem gewölbten Abschnitt versehen sind, der dafür geeignet ist, den Strom gegen jeden der Leitflügel hin auszurichten.

## Claims

1. A device to prevent the formation of solid matter due to projections on an air outlet, for example that of an armoured vehicle, located near to such projections, **characterised in that** it incorporates a shutter (1) comprising at least two vibrating fins (3) fixed onto a support (2), said fins being of two different types (3a, 3b) mounted alternatively and vibrating differently.

2. A device according to Claim 1, **characterised in that** one vibrating fin (3) is connected to the support (2) by a number N of fastenings and the other vibrating fin by a number N+/-1 fastenings.

3. A device according to Claim 2, **characterised in that** the support (2) for the vibrating fins (3) is constituted by an assembly of bars (2) that are substantially perpendicular to the axial direction of the fins (3).

4. A device according to any one of Claims 1 to 3, **characterised in that** it incorporates abutments (5) limiting the possibility of transverse displacement so as to eliminate impacts between the fins (3) and the support (2) thereby also eliminating shocks.

5. A device according to Claim 4, **characterised in that** the abutments (5) are arranged on the fins (3) or on the support (2).

6. A device according to Claim 5, **characterised in that** the abutments (5) are made either partly or totally of a non-metallic material.

7. A device according to any one of Claims 1 to 6, **characterised in that** the vibration of the fins (3) is caused by the shocks, shaking or vibrations to which the outlet is subjected.

8. A device according to any one of Claims 1 to 6, **characterised in that** the vibration of the fins is caused by a line of electromagnets (6) placed near to the vibration nodes of the fins, whose frequency is adapted to the two types of fins and whose phase shifting causes the two types of fins to vibrate in opposition or in quadrature.

9. A device according to any one of Claims 1 to 8, **characterised in that** the support (2) for the fins (3) is of greater rigidity than the fins (3).

10. A device according to any one of Claims 1 to 8, **characterised in that** the fins (3) are of a thickness giving a rigidity such that their vibrations are not noticeably damped in the presence of projections.

11. A device according to any one of the above Claims, **characterised in that** the shutter (1) comprises upstream airflow deflectors (7) fitted with a curved part able to orient the flow towards each of the fins.
